# EUROPÄISCHE PATENTSCHRIFT

(11) **EP 1 416 802 B1**
(45) Veröffentlichungstag und Bekanntmachung des Hinweises auf die Patenterteilung: **17.10.2007**
(21) Anmeldenummer: 02776919.9
(22) Anmeldetag: 03.08.2002
(51) Int. Cl.: A22C 25/04, A22C 25/08

(54) **VERFAHREN ZUR AUTOMATISIERTEN VERARBEITUNG VON FISCHEN UND ANLAGE ZUM AUFBEREITEN UND VERARBEITEN VON FISCHEN, INSBESONDERE ZUM SCHLACHTEN UND ENTWEIDEN**
AUTOMATED PROCESSING METHOD FOR FISH AND INSTALLATION FOR PREPARING AND PROCESSING FISH, PARTICULARLY FOR SLAUGHTERING AND GUTTING THE SAME
PROCEDE DE TRAITEMENT AUTOMATISE DE POISSONS ET INSTALLATION DE PREPARATION ET DE TRAITEMENT DE POISSONS, EN PARTICULIER D'ABATTAGE ET DE VIDAGE

(30) Priorität: 03.08.2001 DE 10137651
(43) Veröffentlichungstag der Anmeldung: 12.05.2004
(60) Teilanmeldung: 07075650.7
(73) Patentinhaber: NORDISCHER MASCHINENBAU RUD. BAADER GMBH + CO KG, 23560 Lübeck (DE)
(72) Erfinder: GROSSEHOLZ, Werner, 23628 Krummesse (DE); PAULSOHN, Carsten, 23564 Lübeck (DE); PETERS, Manfred, 23611 Bad Schwartau (DE); DANN, Andreas, 23569 Lübeck (DE)
(74) Vertreter: Wenzel & Kalkoff
(86) Internationale Anmeldenummer: PCT/EP2002/008678
(87) Internationale Veröffentlichungsnummer: WO 2003/013262

(56) Entgegenhaltungen:
- WO-A-00/48909
- WO-A-95/25431
- WO-A-99/57016
- DD-A- 145 054
- DE-A- 1 454 209
- DE-A- 1 481 318
- DE-C- 259 379
- DE-C- 739 656
- DE-C- 805 306
- US-A- 5 151 062

## Beschreibung

Die Erfindung befasst sich mit einem Mittel zur Verknüpfung einer zentralen Zuführeinrichtung mit einer Verarbeitungsmaschine zum Verarbeiten von Fischen, wobei das Mittel als Förderelement derart ausgebildet ist, dass die Fische von der Zuführeinrichtung über das Förderelement zur jeweiligen Eingabeposition der Verarbeitungsmaschine gelangen. Des Weiteren betrifft die Erfindung eine Anlage zum Aufbereiten und Verarbeiten von Fischen, insbesondere zum Schlachten und Entweiden derselben, im wesentlichen umfassend eine Transporteinrichtung für Fische, einen zentralen Vorratstank zur Aufnahme bzw. zum Sammeln der zugeführten Fische sowie mindestens zwei Verarbeitungsmaschinen zum Verarbeiten von Fischen, eine zentrale Zuführeinrichtung zum kontinuierlichen Zuführen der Fische zu jeder Verarbeitungsmaschine, wobei die Zuführeinrichtung im Bereich jeder Verarbeitungsmaschine zum Verarbeiten der Fische Mittel zur Übergabe der Fische von der Zuführeinrichtung zu jeder Verarbeitungsmaschine aufweist. Die Erfindung betrifft auch ein Verfahren zur automatisierten Verarbeitung von Fischen, im wesentlichen umfassend die folgenden Schritte: Zuführen und Sammeln der Fische in einem zentralen Vorratstank, Vereinzeln der Fische, manuelles Ausrichten der Fische in eine definierte Lage, automatisiertes Verarbeiten der Fische, wobei die Fische vor dem automatisierten Verarbeiten auf einer zentralen Zuführeinrichtung abgelegt und ausgerichtet und dann in den Bereich der ausgewählten Verarbeitungsmaschine transportiert werden.

Bekannte Verfahren und Anlagen verfügen über eine einzelne Verarbeitungsmaschine, beispielsweise eine Vorrichtung zum Schlachten und Entweiden der Fische, wie sie aus dem Dokument DE 198 29 376 bekannt ist. Unmittelbar an dieser Vorrichtung befindet sich eine Vorratsmulde zur Aufnahme und zum Sammeln der über die Transporteinrichtung in die Vorratsmulde geförderten Fische. Eine Bedienperson entnimmt der Vorratsmulde nun einzeln die an der Vorrichtung zu verarbeitenden Fische und führt diese der Vorrichtung in einer definierten Lage/Position zu. Das Schlachten und Entweiden erfolgt dann automatisch durch die Vorrichtung. Es gibt jedoch bereits Anlagen, bei denen mehrere Maschinen in einer Anlage zusammengefasst worden sind, wobei die einzelnen Maschinen über ein zentrales Zuführband mit Fisch versorgt werden. Die Fische werden an den einzelnen Maschinen vom Zuführband geleitet und einer Vorratsmulde zugeführt. In dieser Vorratsmulde liegen die Fische ungeordnet und müssen erneut vereinzelt und ausgerichtet werden. Hierzu ist an jeder Maschine eine Bedienperson erforderlich. Ein Mittel, das eine Verbindung zwischen dem Zuführband und der Verarbeitungsmaschine schafft, ist nicht vorgesehen. Die bekannten Anlagen und Verfahren weisen gemeinsam den Nachteil auf, dass sie sehr personalintensiv ist, da mindestens an jeder Vorrichtung in einer Anlage eine Bedienperson erforderlich ist, um ein paralleles Bestücken der Vorrichtungen mit Fisch zu ermöglichen. Ein kontinuierlicher Verfahrensablauf ist demnach kostenintensiv.

Aus der DE 805 306 ist ein Mittel mit den Merkmalen des Oberbegriffes des Anspruches 1 bekannt. Die gezeigte Einrichtung weist einen Vorratsbehälter auf, der in einer Ebene geneigt ausgerichtet ist. Die Neigung variiert. Mit anderen Worten weist die Ebene unterschiedliche Neigungswinkel auf. Allerdings ist die Neigung stets lediglich in einer Ebene ausgebildet, so dass die zu fördernden Fische auf den Sortiertisch rutschen und dort liegen bleiben, bis eine Bedienperson die Fische sortiert.

Aus der WO 00/48909 geht eine Anlage mit den Merkmalen des Oberberiffes des Anspruches 9 hervor. Bei dieser Anlage ist wie zuvor beschrieben ebenfalls ein erheblicher Personalbedarf erforderlich, da an jeder Eingabeposition der jeweiligen Verarbeitungsmaschine eine Bedienperson vorgesehen ist.

Der Erfindung liegt damit die Aufgabe zugrunde, ein Mittel zu schaffen, das eine Schnittstelle zwischen einer zentralen Zuführeinrichtung und einer Verarbeitungsmaschine schafft. Des Weiteren ist es Aufgabe der Erfindung, eine Anlage zu schaffen, mit der eine kontinuierliche Verarbeitung von Fischen an mehreren Verarbeitungsmaschinen gleichzeitig gewährleistet ist, wobei die Verarbeitung mit reduziertem Personalaufwand realisiert werden soll. Des weiteren ist es Aufgabe der Erfindung, ein entsprechendes Verfahren vorzuschlagen.

Die Aufgabe wird durch ein Mittel der eingangs genannten Art dadurch gelöst, dass das Förderelement derart ausgebildet ist, dass die Fische selbsttätig zur Eingabeposition der jeweiligen Verarbeitungsmaschine gelangen und mehrere Aufnahmen aufweist, wobei jede Aufnahme zur Speicherung eines Fisches ausgebildet ist und die einzelnen Aufnahmen durch schwenkbare Klappen, Schieber oder dergleichen voneinander getrennt sind. Durch die Aufnahmen und die Trennung der Aufnahmen durch schwenkbare Klappen oder dergleichen wird sichergestellt, dass Unregelmäßigkeiten in der Zuführung der Fische ausgeglichen werden können. Die Ausbildung zum selbsttätigen Bewegen der Fische in den Bereich der Eingabeposition der jeweiligen Verarbeitungsmaschine macht eine Bedienperson im Bereich der Verarbeitungsmaschine obsolet.

Vorzugsweise ist das Förderelement eine in zwei Ebenen geneigte Rutsche, derart, dass jeder Fisch selbsttätig von der Zuführeinrichtung über die Rutsche in die Eingabeposition der Verarbeitungsmaschine gelangt. Durch die im Raum geneigte Rutsche ist auf besonders einfache Weise gewährleistet, dass die Fische auf dieser ohne aktive Fördermittel und/oder Einsatz von Bedienpersonal in die Verarbeitungsmaschine gelangen.

In einer besonders bevorzugten Ausgestaltung des Mittels ist die letzte Aufnahme der Rutsche vor der Verarbeitungsstation derart ausgebildet bzw. angeordnet, dass der Fisch mit seiner Längsachse im wesentlichen parallel zur Abwurfkante der Verarbeitungsmaschine ausgerichtet ist. Dadurch ist sichergestellt, dass der Fisch auch parallel in die Aufnahme der Verarbeitungsstation gleitet bzw. fällt. Damit wird ein Verkanten, Verklemmen der Fische bei der Eingabe bzw. der Zuführung in die Verarbeitungsmaschine, was zum Stillstand und damit zur Unterbrechung des gesamten Verfahrens führt, verhindert.

Die der Erfindung zugrunde liegende Aufgabe wird auch durch eine eingangs beschriebene Anlage dadurch gelöst, dass das Mittel nach einem der Ansprüche 1 bis 8 ausgebildet ist. Die sich daraus ergebenden Vorteile wurden im Zusammenhang mit dem Mittel selbst weiter oben beschrieben. Zur Vermeidung von Wiederholungen wird auf die entsprechenden Passagen verwiesen.

Vorteilhafterweise verfügt die Anlage über eine zentrale Rechnereinheit zur Steuerung und/oder Regelung, mittels der sämtliche Komponenten nach Bedarf und/oder Priorität und/oder Position steuer- und/oder regelbar sind. Dadurch ist gewährleistet, dass die Anlage individuell abgestimmt werden kann, um einen kontinuierlichen Verfahrensablauf, insbesondere ohne Stillstandszeiten der einzelnen Verarbeitungsstationen zu erreichen.

Die Aufgabe wird auch durch das eingangs beschriebene Verfahren durch die folgenden Schritte gelöst: die Fische werden von der Zuführeinrichtung durch einen Abweiser auf ein Mittel zur Übergabe an die Verarbeitungsmaschine gelenkt, wobei die Fische auf dem Mittel in einzelnen Aufnahmen, die durch schwenkbare Klappen, Schieber oder dergleichen voneinander getrennt sind, gespeichert werden, und die Fische rutschen dann nach Bedarf und Priorität über das Mittel selbsttätig zur jeweiligen Verarbeitungsmaschine. Die sich daraus ergebenden Vorteile wurden ebenfalls weiter oben beschrieben.

Eine vorteilhafte Weiterbildung des erfindungsgemäßen Verfahrens ist weiterhin dadurch gekennzeichnet, dass mittels Überwachungsmitteln sowie einer übergeordneten Rechnereinheit zur Steuerung und/oder Regelung sämtlicher Komponenten anhand von Bedarfsmeldungen und/oder Prioritätsbefehlen der Zuführeinrichtung und/oder der Verarbeitungsmaschinen zum Schlachten und Entweiden und/oder der Mittel bestimmt wird, wo der jeweils nächste Fisch abgelegt wird. Dadurch wird sichergestellt, dass die Verarbeitungsmaschinen permanent mit Fischen versorgt werden können. So kann beispielsweise die örtlich am weitesten vom zentralen Vorratstank angeordnete Verarbeitungsmaschine eine bevorzugte Priorität erhalten, weil die Zuführung im Vergleich zu näher positionierten Verarbeitungsmaschinen mehr Zeit in Anspruch nimmt.

Vorteilhafterweise werden die Fische nach einer Beruhigungszeit in eine nachfolgende Aufnahme in Richtung der Verarbeitungsmaschine geleitet, sofern das Überwachungsmittel der nachfolgenden Aufnahme Bedarf gemeldet hat. Bedarf bedeutet in diesem Zusammenhang, dass die Aufnahme leer ist und auf den nächsten Fisch wartet. Durch diese bedarfs- und prioritätsgesteuerte Abwicklung des Verfahrens sind zumindest immer in der der Verarbeitungsstation nächsten Aufnahme Fische angeordnet, die ein kontinuierliches Zuführen in die Verarbeitungsstation sicherstellen.

Weitere bevorzugte Merkmale und/oder Verfahrensschritte sind den Unteransprüchen und der Beschreibung zu entnehmen. Besonders bevorzugte Weiterbildungen, Ausführungsformen und Verfahrensschritte werden anhand der beigefügten Zeichnung näher erläutert. In der Zeichnung zeigt:
- Fig. 1: eine erste Anlage gemäß der Erfindung mit drei Verarbeitungsmaschinen,
- Fig. 2: ein Mittel zur Verknüpfung einer zentralen Zuführeinrichtung mit einer Verarbeitungsmaschine, wie in Figur 1 dargestellt, und
- Fig. 3: ein schematische Darstellung eines Schaltplans zur Steuerung/Regelung der Anlage gemäß Figur 1.

Die in den Figuren dargestellte Anlage dient zum Verarbeiten von Fischen. Vorzugsweise sind die Anlagen zum Schlachten und Entweiden geköpfter und ungeköpfter Fische vorgesehen.

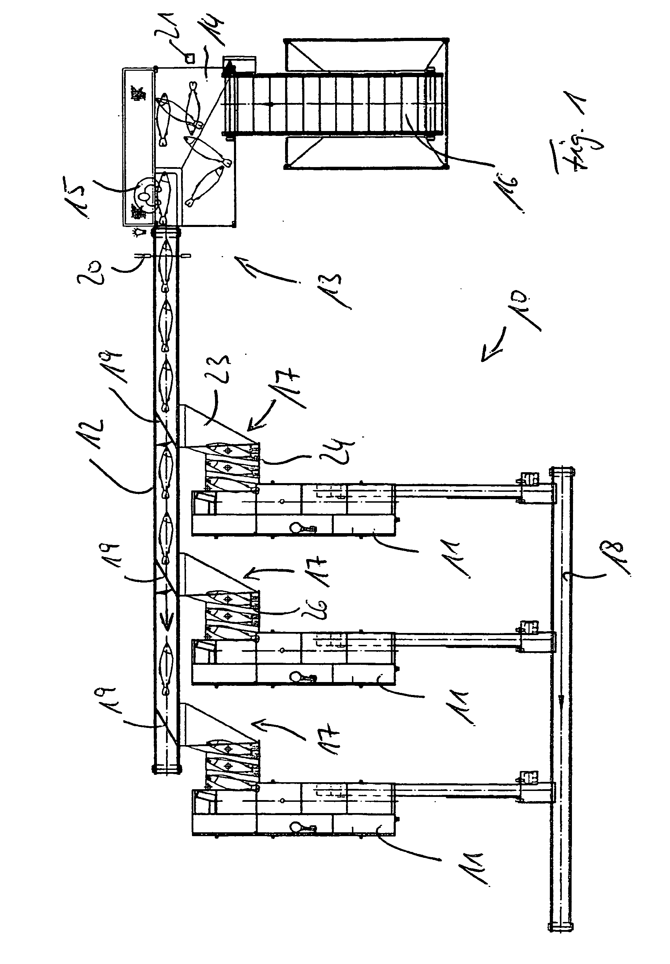

In der Figur 1 ist eine Anlage 10 dargestellt, in der drei Verarbeitungsmaschinen 11 parallel zueinander angeordnet sind. Die Verarbeitungsmaschinen 11 sind über eine zentrale Zuführeinrichtung, die als Zuführband 12 ausgebildet ist, miteinander verbunden. Im Einlegebereich 13 des Zuführbandes 12 ist ein zentraler Vorratstank 14 angeordnet, aus dem eine Bedienperson 15 die Fische entnehmen kann. Der Vorratstank 14 ist über eine Transporteinrichtung 16 mit Fischen befüllbar. Die Verarbeitungsmaschinen 11 sind mit dem Zuführband 12 über Mittel 17 zur Übergabe der Fische verbunden. Im Ausgabebereich der Verarbeitungsmaschinen 11 ist ein Abführband 18 zum Abtransport der geschlachteten und entweideten Fische angeordnet.

Die Anlage 10 verfügt über eine (in der Figur 1 nicht dargestellte) Rechnereinheit zur Steuerung und/oder Regelung, mittels der sämtliche Komponenten nach Bedarf und/oder Priorität und/oder Position steuer- und/oder regelbar sind. Die Rechnereinheit ist frei programmierbar, so dass auch individuelle Anpassungen, beispielsweise bedingt durch eine Erweiterung der Anlage 10 um eine oder mehrere Verarbeitungsmaschinen 11, möglich sind.

Das Zuführband 12 weist steuer- und/oder regelbare Abweiser 19 auf, mittels der die Fische von dem Zuführband 12 in Richtung der jeweils angesteuerten Verarbeitungsmaschine 11 lenkbar sind. Die Abweiser 19 sind in der gezeigten Ausführungsform als schwenkbare Klappen ausgebildet. Auch andere Betätiger, wie z.B. Schieber oder Mitnehmer können zum Fördern der Fische vom Zuführband 12 vorgesehen sein. Entscheidend ist, dass die Fische einen Impuls quer zur Längsrichtung des Zuführbandes 12 erhalten, der groß genug ist, um die Fische zu bewegen. Des weiteren weist das Zuführband 12 (nicht dargestellte) Bandmarkierungen auf, die ein positions- und lagegenaues Auflegen der Fische auf das Zuführband 12 ermöglichen und erleichtern. Im Bereich des Zuführbandes 12 in Transportrichtung (siehe Pfeil in Figur 1) der Fische hinter dem Auflege- bzw. Einlegebereich 13 der Fische auf das Zuführband 12 und vor der ersten Verarbeitungsmaschine 11 sind Mittel 20 zur Erkennung der Fische angeordnet. Das Mittel 20 ist als Sensor zur Registrierung und/oder Lageerkennung und/oder Erfassung geometrischer Daten der Fische ausgebildet. Aber auch andere übliche optische und mechanische Messeinrichtungen sind einsetzbar.

Im Bereich des Vorratstanks 14 ist ebenfalls ein Überwachungsmittel, das im vorliegenden Fall als Sensor 21 ausgebildet ist angeordnet. Der Sensor 21 dient zur Überwachung des Füllstandes des Vorratstanks 14 bzw. zur Mengenregulierung desselben.

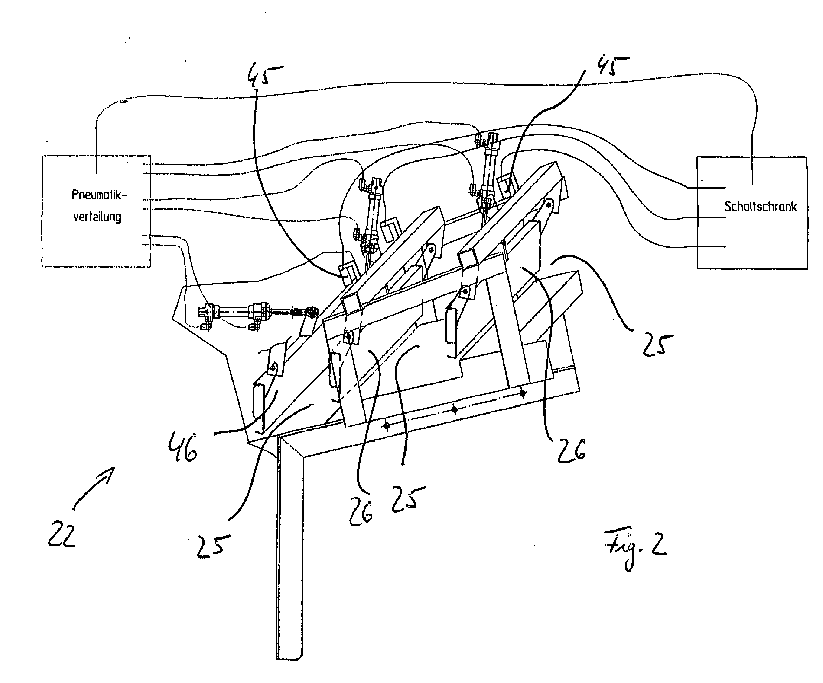

Die Mittel 17 zur Übergabe ist als passives Förderelement 22 ausgebildet. Das bedeutet, dass die Fische selbsttätig, ohne zusätzliche Antriebsmittel oder Förderhilfen transportiert werden. Vorzugsweise ist das Förderelement 22 im wesentlichen aus einer Rutsche gebildet (siehe insbesondere Figuren 1 und 2). Die Rutsche ist etwa L-förmig ausgebildet und in zwei Ebenen geneigt, so dass jeder Fisch selbsttätig, im wesentlichen allein durch Schwerkraft, in seine endgültige Eingabeposition rutscht. Die Rutsche weist einen ersten Abschnitt 23 auf, der vorzugsweise aus einem glatten Blech oder dergleichen gebildet ist, auf dem die Fische einzeln dem zweiten Abschnitt 24 zugeführt werden. Der zweite Abschnitt 24 weist mehrere Aufnahmen 25 auf, wobei jede Aufnahme 25 zur Aufnahme eines einzelnen Fisches dient. Die Aufnahmen 25 sind derart angeordnet, dass die Fische mit ihrer Längsachse etwa parallel zur Längsachse der Verarbeitungsmaschine liegen. Mindestens die der Verarbeitungsmaschine 11 nächstliegende Aufnahme 25 ist so angeordnet, dass der Fisch unmittelbar im Bereich der Eingabeposition in die Verarbeitungsmaschine 11 parallel ausgerichtet ist. Die weiteren Aufnahmen 25 können auch fächerartig angeordnet sein.

Die Aufnahmen 25 im Abschnitt 24 der Rutsche sind durch Trennmittel voneinander getrennt. Die Trennmittel sind in der gezeigten Ausführung als schwenkbare Klappen 26 ausgebildet. Aber auch Schieber und andere bewegbare Elemente können zur Unterteilung in einzelnen Fächer dienen. Jede Aufnahme 25 weist ein Überwachungsmittel 45 auf, das zumindest das Vorhandensein und das Fehlen eines Fisches, also eine ja/nein-Abfrage, ermöglicht. Als Überwachungsmittel 45 können mechanische, optische oder andere übliche berührungslos oder berührend arbeitende Messmittel eingesetzt werden. Auch ist eine Aufnahme weiterer Messgrößen zusätzlich zur ja/nein-Abfrage möglich. Jede Aufnahme 25 weist eine Positionierungshilfe für die Fische auf, so dass diese, im gezeigten Beispiel gemäß Figur 1, Schwanz voraus in die Aufnahme gleiten und mittels der Positionierungshilfe lagegenau zur weiteren Verarbeitung in der Aufnahme 25 liegen. Die Positionierungshilfe dient gleichzeitig als Anschlag, so dass die Fische nicht aus der Aufnahme 25 herausrutschen.

Der Rutsche ist, vorzugsweise im Übergangsbereich vom Zuführband 12 auf den Abschnitt 23, ein Mittel zur Zuführung von Flüssigkeiten, nämlich insbesondere Wasser, mit Gleitmitteln angereichertes Wasser oder dergleichen, angeordnet, um den Transportvorgang über die Rutsche zu unterstützen.

Das gesamte Förderelement 22 ist mit einer Rechnereinheit zur Steuerung und/oder Regelung sämtlicher Komponenten verbunden. Insbesondere die Klappen 26 sind individuell ansteuerbar, wobei die Rechnereinheit des Förderelementes 22 mit der Rechnereinheit 47 der gesamten Anlage 10 in Wirkverbindung steht.

Die Erfindung beschränkt sich nicht auf die dargestellten Ausführungsformen. Vielmehr sind auch Anlagen mit unterschiedlich vielen Verarbeitungsmaschinen 11 denkbar, die wie in einem Bussystem parallel, versetzt oder schräg nebeneinander angeordnet sind, wobei die Verarbeitungsmaschinen 11 durch das gemeinsame Zuführband 12 miteinander verbunden sind. Die Anlagen können auch über weitere Signal- und Sicherheitselemente verfügen. Beispielsweise kann im Einführbereich 13 des Zuführbandes 12 ein optisches oder akustisches Signal vorgesehen sein, das der Bedienperson 15 signalisiert, dass keine weiteren Fische auf das Zuführband 12 gelegt werden sollen. Auch sind andere als die gezeigten Anordnungen der Maschinen 11 zueinander sowie der Maschinen 11 in Bezug auf das Zuführband 12 möglich.

Im folgenden wird der Verfahrensablauf der einzelnen Anlagen beschrieben:

Das Verfahren dient zur Verarbeitung von Fischen insbesondere in einem Gewichtsbereich von etwa 2 bis 11 kg. Der zentrale Vorratstank 14 wird über die Transporteinrichtung 16 ausreichend mit Fischen versorgt, so dass die Bedienperson 15 die Fische kontinuierlich aus dem Vorratstank 14 entnehmen kann. Diese Vereinzelung der Fische beim Entnehmen erfolgt durch eine Bedienperson 15 für alle angeschlossenen Verarbeitungsmaschinen 11. Die Bedienperson 15 legt die Fische einzeln und ausgerichtet auf das Zuführband 12. Hierbei helfen entweder die Bandmarkierungen oder das Mittel 20, das fehlerhaft erkannte Fische ausschleust. In der gezeigten Ausführungsform gemäß Figur 1 ist die Fischposition Schwanz voraus und mit der Rückenflosse zur Bedienperson 15. Je nach Anwendung kann aber auch eine andere Positionierung gewählt werden. Das Mittel 20 zur Überwachung prüft die Fischposition und -lage. Je nach Vorgabe aus der Rechnereinheit bezüglich der erforderlichen Position/Lage, den erforderlichen geometrischen Daten und weiteren ermittelten Parametern, also nach Vergleich mit Solldaten bzw. Sollposition wird der Fisch bei positivem Ergebnis auf dem Zuführband 12 weitergefördert. Im Falle eines negativen Ergebnisses, also wenn der Fisch z.B. falsch positioniert oder fehlerhaft ist, wird der Fische mittels des Abweisers 19 ausgeschleust.

Der auf dem Zuführband 12 in Richtung der Verarbeitungsmaschinen 11 weiter geleitete Fisch wird nun je nach Bedarf und Priorität - beides wird durch die Rechnereinheit im Zusammenspiel mit dem Mittel 20, den Überwachungsmitteln 45 und den übrigen Sensoren und dergleichen - durch die Abweiser 19 auf das Mittel 17 zur Übergabe gelenkt. Die üblicherweise geöffneten Abweiser 19, die einen Transport der Fische auf dem Zuführband 12 ermöglichen, werden kurzzeitig ausgeschwenkt, so dass der Fisch an der gewünschten Position durch die Schubbewegung und/oder den Impuls um etwa 90° gedreht und vom Zuführband 12 befördert wird. Je nach Anlage gelangt der Fisch dann auf das Förderelement 22. Bei der Ausführungsform gemäß Figur 1 sind die Klappen 26 sämtlicher Aufnahmen 25 üblicherweise geschlossen, so dass der Fisch in der jeweils ersten Aufnahme 25 kurz verharrt. Die Überwachungsmittel 45 erkennen das Vorhandensein des Fisches und melden dies der Rechnereinheit 47. Nach einer Beruhigungszeit des Fisches öffnen die Klappen 26 zur benachbarten, einen Schritt näher an der Verarbeitungsmaschine 11 gelegenen Aufnahme 25, wenn das Überwachungsmittel 45 die Aufnahme 25 wegen eines fehlenden Fisches freigegeben hat. Der Fisch rutscht dann eine Position weiter nach unten. So gelangen die Fische Schritt für Schritt unmittelbar in den Eingabebereich der Verarbeitungsmaschinen 11. Die Verarbeitungsmaschine 11 öffnet ihre eigene Eintaktklappe 46 (siehe Figur 2) in ihrem Arbeitstakt, so dass der unmittelbar vor der Eintaktklappe 46 liegende Fisch mit seiner Längsachse parallel zur Abwurfkante der Verarbeitungsmaschine 11 in diese fällt. Die Eintaktklappe 46 schließt unmittelbar nach der Fischabgabe und signalisiert das Fehlen eines Fisches. Mit anderen Worten bedeutet dies, dass die Verarbeitungsmaschinen 11 den Bedarf bestimmen bzw. vorgeben. Die Rechnereinheit steuert dann die Zuführung der Fische nach einem vorgegebenen Programm.

Für den Fall, dass die Bedienperson 15 einen Leertakt erzeugt, wird dieser durch die Speicher- bzw. Vorratsfunktion des Förderelementes 22 ausgeglichen, so dass die Verarbeitungsmaschinen 11 kontinuierlich mit Fischen versorgt werden. Es besteht daher auch die Möglichkeit, das Auflegen und Ausrichten der Fische auf das Zuführband 12 vollautomatisch durchzuführen, so dass die Anlagen ohne permanente Bindung einer Bedienperson 15 an die Anlage arbeiten können.

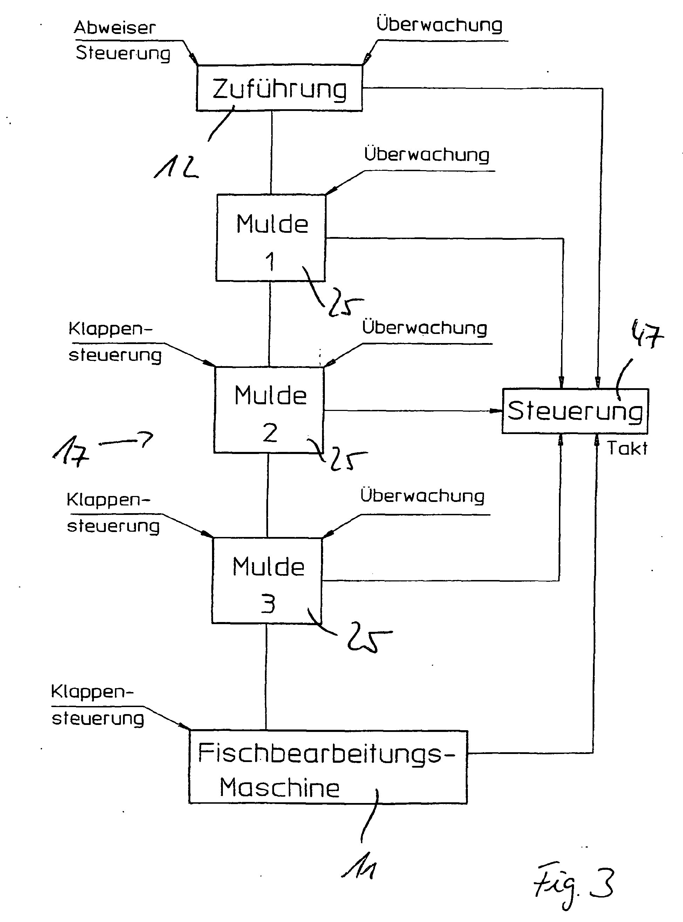

Anhand der Figur 3 ist noch einmal mit Bezug auf die Anlage 10 veranschaulicht, wie die Steuerung/Regelung der Anlage 10 bzw. der Zuführung zu den Verarbeitungsmaschinen 11 funktioniert. Die zentrale Steuerung ist sowohl mit dem Zuführungsband 12 (Zuführung in Figur 3) als auch mit der Verarbeitungsstation 11 (Fischbearbeitungsmaschine in Figur 3) verbunden. Zwischen dem Zuführband 12 und der Verarbeitungsstation 11 ist das Mittel 17 zur Übergabe angeordnet. Die Aufnahmen 25 (Mulden 1 bis 3 in Figur 3) sind ebenfalls mit der Steuerung verbunden. Anhand der aus den Überwachungsmitteln 20 und 45 übermittelten Daten und Informationen steuert die Steuerung den Ablauf der Anlage 10.

## Patentansprüche

1. Mittel zur Verknüpfung einer zentralen Zuführeinrichtung (12) mit einer Verarbeitungsmaschine (11) zum Verarbeiten von Fischen, wobei das Mittel (17) als Förderelement (22) derart ausgebildet ist, dass die Fische von der Zuführeinrichtung (12) über das Förderelement (22) zur jeweiligen Eingabeposition der Verarbeitungsmaschine (11) gelangen, **dadurch gekennzeichnet, dass** das Förderelement (22) derart ausgebildet ist, dass die Fische selbsttätig zur Eingabeposition der jeweiligen Verarbeitungsmaschine (11) gelangen und mehrere Aufnahmen (25) aufweist, wobei jede Aufnahme (25) zur Speicherung eines Fisches ausgebildet ist und die einzelnen Aufnahmen (25) durch schwenkbare Klappen (26), Schieber oder dergleichen voneinander getrennt sind.

2. Förderelement nach Anspruch 1, **dadurch gekennzeichnet, dass** das Förderelement (22) eine in zwei Ebenen geneigte Rutsche ist, derart, dass jeder Fisch selbsttätig von der Zuführeinrichtung (12) über die Rutsche in die Eingabeposition der Verarbeitungsmaschine (11) gelangt.

3. Förderelement nach Anspruch 1 oder 2, **dadurch gekennzeichnet, dass** die Klappen (26), Schieber oder dergleichen einzeln ansteuerbar sind.

4. Förderelement nach einem der Ansprüche 1 bis 3, **dadurch gekennzeichnet, dass** jeder Aufnahme (25) ein Überwachungsmittel (45) zugeordnet ist.

5. Förderelement nach einem der Ansprüche 1 bis 4, **dadurch gekennzeichnet, dass** jede Aufnahme (25) Positionierungshilfen für den Fisch aufweist.

6. Förderelement nach einem der Ansprüche 1 bis 5, **dadurch gekennzeichnet, dass** das Förderelement (22) mit einer Rechnereinheit zur Steuerung und/oder Regelung sämtlicher Komponenten, insbesondere der Klappen (26), verbunden ist.

7. Förderelement nach einem der Ansprüche 2 bis 6, **dadurch gekennzeichnet, dass** der Rutsche eine Zuführung von Flüssigkeiten zugeordnet ist.

8. Förderelement nach einem der Ansprüche 1 bis 7, **dadurch gekennzeichnet, dass** die letzte Aufnahme (25) vor der Verarbeitungsmaschine (11) derart ausgebildet bzw. angeordnet ist, dass der Fisch mit seiner Längsachse im wesentlichen parallel zur Abwurfkante der Verarbeitungsmaschine (11) angeordnet ist.

9. Anlage zum Aufbereiten und Verarbeiten von Fischen, insbesondere zum Schlachten und Entweiden derselben, im wesentlichen umfassend
a) eine Transporteinrichtung (16) für Fische,
b) einen zentralen Vorratstank (14) zur Aufnahme bzw. zum Sammeln der zugeführten Fische sowie
c) mindestens zwei Verarbeitungsmaschinen (11) zum Verarbeiten von Fischen,
d) eine zentrale Zuführeinrichtung (12) zum kontinuierlichen Zuführen der Fische zu jeder Verarbeitungsmaschine (11), wobei
e) die Zuführeinrichtung (12) im Bereich jeder Verarbeitungsmaschine (11) zum Verarbeiten der Fische Mittel (17) zur Übergabe der Fische von der Zuführeinrichtung (12) zu jeder Verarbeitungsmaschine (11) aufweist,
**dadurch gekennzeichnet, dass** das Mittel (17) nach einem der Ansprüche 1 bis 8 ausgebildet ist.

10. Anlage nach Anspruch 9, **dadurch gekennzeichnet, dass** mehrere Verarbeitungsmaschinen (11) zum Schlachten und Entweiden von Fischen parallel zueinander angeordnet sind, wobei die Verarbeitungsmaschinen (11) durch die zentrale Zuführeinrichtung, nämlich durch ein Zuführband (12) miteinander verbunden sind.

11. Anlage nach Anspruch 9 oder 10, **dadurch gekennzeichnet, dass** die Anlage (10) über eine zentrale Rechnereinheit (47) zur Steuerung und/oder Regelung verfügt, mittels der sämtliche Komponenten nach Bedarf und/oder Priorität und/oder Position steuer- und/oder regelbar sind.

12. Anlage nach Anspruch 11, **dadurch gekennzeichnet, dass** die Rechnereinheit (47) bzw. Steuerung/Regelung frei programmierbar ist.

13. Anlage nach einem der Ansprüche 9 bis 12, **dadurch gekennzeichnet, dass** das Zuführband (12) steuer- und regelbare Abweiser (19) aufweist, mittels der die Fische von dem Zuführband (12) in Richtung der jeweils angesteuerten Verarbeitungsmaschine (11) lenkbar sind.

14. Anlage nach einem der Ansprüche 9 bis 13, **dadurch gekennzeichnet, dass** das Zuführband (12) Bandmarkierungen aufweist.

15. Anlage nach einem der Ansprüche 9 bis 14, **dadurch gekennzeichnet, dass** im Bereich des Zuführbandes (12) in Transportrichtung der Fische hinter der Auflegeposition der Fische auf das Zuführband (12) und vor der ersten Verarbeitungsmaschine (11) Mittel (20) zur Erkennung von Fischen angeordnet sind.

16. Anlage nach Anspruch 15, **dadurch gekennzeichnet, dass** das oder jedes Mittel (20) zur Erkennung als Sensor zur Registrierung und/oder zur Lageerkennung und/oder zur Erfassung geometrischer Daten der Fische ausgebildet ist.

17. Anlage nach einem der Ansprüche 9 bis 16, **dadurch gekennzeichnet, dass** im Bereich des Vorratstanks (14) ein Überwachungsmittel (21) zur Mengenregulierung innerhalb des Vorratstanks (14) angeordnet ist.

18. Anlage nach einem der Ansprüche 9 bis 17, **dadurch gekennzeichnet, dass** jede Verarbeitungsmaschine (11) zum Schlachten und Entweiden an ein zentrales Abführband (18) angeschlossen ist.

19. Verfahren zur automatisierten Verarbeitung von Fischen, im wesentlichen umfassend die folgenden Schritte:
- Zuführen und Sammeln der Fische in einem zentralen Vorratstank (14),
- Vereinzeln der Fische,
- manuelles Ausrichten der Fische in eine definierte Lage,
- automatisiertes Verarbeiten der Fische, wobei
- die Fische vor dem automatisierten Verarbeiten auf einer zentralen Zuführeinrichtung (12) abgelegt und ausgerichtet und dann
- in den Bereich der ausgewählten Verarbeitungsmaschine (11) transportiert werden,
**dadurch gekennzeichnet, dass**
- die Fische von der Zuführeinrichtung (12) durch einen Abweiser (19) auf ein Mittel (17) zur Übergabe an die Verarbeitungsmaschine (11) gelenkt werden, wobei
- die Fische auf dem Mittel (17) in einzelnen Aufnahmen (25), die durch schwenkbare Klappen (26), Schieber oder dergleichen voneinander getrennt sind, gespeichert werden, und
- die Fische dann nach Bedarf und Priorität über das Mittel (17) selbsttätig zur jeweiligen Verarbeitungsmaschine (11) rutschen.

20. Verfahren nach Anspruch 19, **dadurch gekennzeichnet, dass** die Zuführeinrichtung (12) mehrere Vorrichtungen (11) zum Schlachten und Entweiden versorgt.

21. Verfahren nach Anspruch 19 oder 20, **dadurch gekennzeichnet, dass** mittels Überwachungsmitteln (20, 21) sowie einer übergeordneten Rechnereinheit (47) zur Steuerung und/oder Regelung sämtlicher Komponenten anhand von Bedarfsmeldungen und/oder Prioritätsbefehlen der Zuführeinrichtung (12) und/oder der Verarbeitungsmaschinen (11) zum Schlachten und Entweiden und/oder der Mittel (17) bestimmt wird, wo der jeweils nächste Fisch abgelegt wird.

22. Verfahren nach einem der Ansprüche 19 bis 21, **dadurch gekennzeichnet, dass** die einzelnen Komponenten, nämlich insbesondere die Abweiser (19), schwenkbare Klappen (26) und dergleichen sowie die Bandgeschwindigkeit des Zuführbandes (12) separat und abgestimmt aufeinander gesteuert und geregelt werden.

23. Verfahren nach einem der Ansprüche 19 bis 22, **dadurch gekennzeichnet, dass** der Fisch passiv in eine Aufnahme (25) in dem Mittel (17) zur Übergabe gefördert wird, wobei ein Überwachungsmittel (45) das Vorhandensein bzw. Fehlen eines Fisches in der Aufnahme (25) erkennt und entsprechende Befehle/Signale an die Rechnereinheit (47) zur Übermittlung des Bedarfs sendet.

24. Verfahren nach einem der Ansprüche 19 bis 23, **dadurch gekennzeichnet, dass** der Fisch nach einer Beruhigungszeit in eine nachfolgende Aufnahme (25) in Richtung der Verarbeitungsmaschine (11) geleitet wird, sofern das Überwachungsmittel (45) der nachfolgenden Aufnahme (25) Bedarf gemeldet hat.

25. Verfahren nach einem der Ansprüche 19 bis 24, **dadurch gekennzeichnet, dass** der Fisch schrittweise unmittelbar bis vor die Eintaktklappe (46) der Verarbeitungsmaschine (11) geleitet wird.

26. Verfahren nach einem der Ansprüche 19 bis 25, **dadurch gekennzeichnet, dass** der Fisch nach dem Öffnen der Eintaktklappe (46) mit seiner Längsachse parallel zur Abwurfkante der Verarbeitungsmaschine (11) in diese fällt.

## Claims

1. Means for linking a central delivery device (12) to a processing machine (11) for processing fish, the means (17) being designed as a conveying element (22) in such a way that the fish pass from the delivery device (12) via the conveying element (22) to the respective input position of the processing machine (11), **characterised in that** the conveying element (22) is designed in such a way that the fish automatically pass to the input position of the respective processing machine (11), and comprises several receptacles (25), each receptacle (25) being designed for the storage of one fish, and the individual receptacles (25) being separated from each other by pivotable flaps (26), slides or the like.

2. Conveying element according to claim 1, **characterised in that** the conveying element (22) is a chute inclined in two planes in such a way that each fish passes automatically from the delivery device (12) via the chute into the input position of the processing machine (11).

3. Conveying element according to claim 1 or 2, **characterised in that** the flaps (26), slides or the like can be controlled individually.

4. Conveying element according to any of claims 1 to 3, **characterised in that** each receptacle (25) is assigned a monitoring means (45).

5. Conveying element according to any of claims 1 to 4, **characterised in that** each receptacle (25) comprises positioning aids for the fish.

6. Conveying element according to any of claims 1 to 5, **characterised in that** the conveying element (22) is connected to a computer unit for controlling and/or regulating all components, in particular the flaps (26).

7. Conveying element according to any of claims 2 to 6, **characterised in that** the chute is assigned a delivery of liquids.

8. Conveying element according to any of claims 1 to 7, **characterised in that** the last receptacle (25) before the processing machine (11) is designed or arranged in such a way that the fish is arranged with its longitudinal axis substantially parallel to the discharge edge of the processing machine (11).

9. Apparatus for preparing and processing fish, in particular for slaughtering and gutting them, essentially including
a) a transport device (16) for fish,
b) a central storage tank (14) for holding or for collecting the fish delivered, and
c) at least two processing machines (11) for processing fish,
d) a central delivery device (12) for continuously delivering the fish to each processing machine (11),
e) the delivery device (12) comprising, in the region of each processing machine (11) for processing the fish, means (17) for transfer of the fish from the delivery device (12) to each processing machine (11),
**characterised in that** the means (17) is designed according to any of claims 1 to 8.

10. Apparatus according to claim 9, **characterised in that** several processing machines (11) for slaughtering and gutting fish are arranged parallel to each other, the processing machines (11) being connected to each other by the central delivery device, namely by a delivery belt (12).

11. Apparatus according to claim 9 or 10, **characterised in that** the apparatus (10) has a central computer unit (47) for control and/or regulation, by means of which all components can be controlled and/or regulated according to request and/or priority and/or position.

12. Apparatus according to claim 11, **characterised in that** the computer unit (47) or control/regulating means is freely programmable.

13. Apparatus according to any of claims 9 to 12, **characterised in that** the delivery belt (12) comprises controllable and regulatable deflectors (19) by means of which the fish can be steered from the delivery belt (12) in the direction of the processing machine (11) being driven at the time.

14. Apparatus according to any of claims 9 to 13, **characterised in that** the delivery belt (12) has belt markings.

15. Apparatus according to any of claims 9 to 14, **characterised in that** in the region of the delivery belt (12) in the direction of transport of the fish behind the position of laying the fish on the delivery belt (12) and before the first processing machine (11) are arranged means (20) for detecting fish.

16. Apparatus according to claim 15, **characterised in that** the or each detection means (20) is designed as a sensor for recording and/or for detecting position and/or for collecting geometric data of the fish.

17. Apparatus according to any of claims 9 to 16, **characterised in that** in the region of the storage tank (14) is arranged a monitoring means (21) for regulating the quantity within the storage tank (14).

18. Apparatus according to any of claims 9 to 17, **characterised in that** each processing machine (11) for slaughtering and gutting is connected to a central discharge belt (18).

19. Method for the automated processing of fish, essentially including the following steps:
- delivering and collecting the fish in a central storage tank (14),
- separating the fish,
- manually orienting the fish in a defined position,
- automated processing of the fish, wherein
- before automated processing the fish are laid on a central delivery device (12) and oriented and then
- transported into the region of the selected processing machine (11),
**characterised in that**
- the fish are steered from the delivery device (12) by a deflector (19) onto a means (17) for transfer to the processing machine (11), wherein
- the fish on the means (17) are stored in individual receptacles (25) which are separated from each other by pivotable flaps (26), slides or the like, and
- the fish then automatically slide to the respective processing machine (11) according to request and priority.

20. Method according to claim 19, **characterised in that** the delivery device (12) supplies several devices (11) for slaughtering and gutting.

21. Method according to claim 19 or 20, **characterised in that**, by monitoring means (20, 21) and a master computer unit (47) for the control and/or regulation of all components with the aid of request messages and/or priority commands of the delivery device (12) and/or the processing machines (11) for slaughtering and gutting and/or the means (17), it is determined where the next fish will be deposited.

22. Method according to any of claims 19 to 21, **characterised in that** the individual components, namely in particular the deflectors (19), pivotable flaps (26) and the like as well as the belt speed of the delivery belt (12) are controlled and regulated separately and in co-ordination with each other.

23. Method according to any of claims 19 to 22, **characterised in that** the fish is conveyed passively into a receptacle (25) in the transfer means (17), a monitoring means (45) detecting the presence or absence of a fish in the receptacle (25) and sending corresponding commands/signals to the computer unit (47) for transmission of the request.

24. Method according to any of claims 19 to 23, **characterised in that** after a calming time the fish is guided into a subsequent receptacle (25) in the direction of the processing machine (11) provided that the monitoring means (45) has reported a request to the subsequent receptacle (25).

25. Method according to any of claims 19 to 24, **characterised in that** the fish is guided stepwise to immediately in front of the single-ended flap (46) of the processing machine (11).

26. Method according to any of claims 19 to 25, **characterised in that** after opening of the single-ended flap (46) the fish falls with its longitudinal axis parallel to the discharge edge of the processing machine (11) into the latter.

## Revendications

1. Moyen de combinaison d'un dispositif central d'amenée (12) avec une machine de traitement (11) permettant de traiter des poissons, le moyen (17) étant conformé en élément de transport (22) de sorte que les poissons passent par l'élément de transport (22) du dispositif d'amenée (12) à la position d'entrée respective de la machine de traitement (11), **caractérisé en ce que** l'élément de transport (22) est conformé pour que les poissons arrivent automatiquement à la position d'entrée de la machine de traitement respective (11) qui comporte plusieurs logements (25), chaque logement (25) étant conformé pour recevoir un poisson et les logements individuels (25) sont séparés l'un de l'autre par des trappes pivotantes (26), des volets pivotants ou analogues.

2. Elément de transport selon la revendication 1, **caractérisé en ce que** l'élément de transport (22) est une goulotte inclinée dans deux plans de sorte que chaque poisson passe automatiquement par la goulotte du dispositif d'amenée (12) dans la position d'entrée de la machine de traitement (11).

3. Élément de transport selon la revendication 1 ou 2, **caractérisé en ce que** les trappes (26), les volets ou analogues peuvent être commandés individuellement.

4. Élément de transport selon l'une des revendications 1 à 3, **caractérisé en ce** q'un moyen de surveillance (45) est associé à chaque logement (25).

5. Élément de transport selon l'une des revendications 1 à 4, **caractérisé en ce que** chaque logement (25) comporte des auxiliaires de positionnement du poisson.

6. Élément de transport selon l'une des revendications 1 à 5, **caractérisé en ce que** l'élément de transport (22) est relié à une unité informatique permettant de commander et de régler tous les composants, notamment les trappes (26).

7. Élément de transport selon l'une des revendications 2 à 6, **caractérisé en ce qu'**une amenée de liquide est associée à la goulotte.

8. Élément de transport selon l'une des revendications 1 à 7, **caractérisé en ce que** le dernier logement (25) est conformé respectivement disposé en avant de la machine de traitement (11) de sorte que le poisson est disposé avec son axe longitudinal sensiblement parallèle au bord d'évacuation de la machine de traitement (11).

9. Installation de préparation et de traitement de poissons, notamment pour l'abattage et le retrait d'arêtes de ces poissons, ladite installation comportant essentiellement
a) un dispositif (16) de transport de poissons,
b) un réservoir central (14) destiné à recevoir respectivement collecter les poissons amenés ainsi que
c) au moins deux machines de traitement (11) destinées au traitement de poissons,
d) un dispositif d'amenée central (12) destiné à amener en continu les poissons à chaque machine de traitement (11),
e) le dispositif d'amenée (12) comportant, au niveau de chaque machine de traitement (11) destinée à traiter les poissons, des moyens (17) destinés à transférer les poissons du dispositif d'amenée (12) à chaque machine de traitement (11),
**caractérisée en ce que** le moyen (17) est selon l'une des revendications 1 à 8.

10. Installation selon la revendication 9, **caractérisée en ce que** plusieurs machines de traitement (11) destinées à l'abattage et au retrait d'arêtes de poissons sont disposées parallèlement les unes aux autres, les machines de traitement (11) étant reliées l'une à l'autre par le dispositif d'amenée central, c'est-à-dire par une bande d'amenée (12).

11. Installation selon la revendication 9 ou 10, **caractérisée en ce que** l'installation (10) dispose d'une unité informatique centralisée (47) pour la commande et/ou le réglage, laquelle permet de commander et/ou régler tous les composants selon la demande et/ou la priorité et/ou la position.

12. Installation selon la revendication 11, **caractérisé en ce que** l'unité informatique (47) respectivement la commande/le réglage peuvent être programmés librement.

13. Installation selon l'une des revendications 9 à 12, **caractérisée en ce que** la bande d'amenée (12) comporte des déflecteurs (19) pouvant être commandés et réglés, lesquels déflecteurs permettent de dévier les poissons de la bande d'amenée (12) en direction de la machine de traitement (11) qui est commandée.

14. Installation selon l'une des revendications 9 à 13, **caractérisée en ce que** la bande d'amenée (12) comporte des repères de bande.

15. Installation selon l'une des revendications 9 à 14, **caractérisée en ce que** des moyens (20) de détection de poissons sont disposés au niveau de la bande d'amenée (12) en arrière de la position de mise en place des poissons sur la bande d'amenée (12) et en avant de la première machine de traitement (11), par référence au sens de transport des poissons.

16. Installation selon la revendication 15, **caractérisée en ce que** le moyen ou chaque moyen (20) de détection est conformé en capteur d'enregistrement et/ou de détection de position et/ou de détection de données géométriques des poissons.

17. Installation selon l'une des revendications 9 à 16, **caractérisée en ce qu'**un moyen de surveillance (21) destiné à réguler la quantité à l'intérieur du réservoir (14) est placé au niveau du réservoir (14).

18. Installation selon l'une des revendications 9 à 17, **caractérisée en ce que** chaque machine de traitement (11) destinée à l'abattage et au retrait d'arêtes est raccordée à une bande d'enlèvement centrale (18).

19. Procédé de traitement automatique de poissons, lequel procédé comporte essentiellement les étapes suivantes consistant à :
- amener et collecter des poissons dans un réservoir central (14),
- isoler les poissons,
- orienter manuellement les poissons dans une position définie,
- traiter automatiquement les poissons,
- les poissons étant déposés et orientés sur un dispositif d'amenée central (12) avant le traitement automatique puis
- étant transportés dans la région de la machine de traitement choisie (11),
**caractérisé en ce que**
- les poissons sont déviés par un déflecteur (19) du dispositif d'amenée (12) vers un moyen (17) destiné à les transférer à la machine de traitement (11),
- les poissons sont reçus sur le moyen (17) dans des logements individuels (25) qui sont séparés les uns des autres, par des trappes pivotantes (26), des volets pivotants ou analogues, et
- les poissons sont ensuite évacués automatiquement selon la demande et la priorité par le moyen (17) vers la machine de traitement respective (11).

20. Procédé selon la revendication 19, **caractérisé en ce que** le dispositif d'amenée (12) alimente plusieurs dispositifs (11) destinés à l'abattage et au retrait d'arêtes.

21. Procédé selon la revendication 19 ou 20, **caractérisé en ce que**, par utilisation de moyens de surveillance (20, 21) ainsi que d'une unité informatique (47) destinée à commander et régler tous les composants en fonction de messages de demandes et/ou d'instructions de priorité du dispositif d'amenée (12) et/ou des machines de traitement (11) destinés à l'abattage et au retrait d'arêtes et/ou du moyen (17), on détermine où placer le poisson suivant.

22. Procédé selon l'une des revendications 19 à 21, **caractérisé en ce que** les composants individuels, c'est-à-dire notamment les déflecteurs (19), les trappes pivotantes (26) et analogues ainsi que la vitesse de la bande d'amenée (12) sont commandés et réglés séparément en étant adaptés les uns aux autres.

23. Procédé selon l'une des revendications 19 à 22, **caractérisé en ce que** le poisson est transporté de façon passive dans un logement (25) se trouvant dans le moyen de transfert (17), un moyen de surveillance (45) détectant la présence respectivement l'absence d'un poisson dans le logement (25) et envoyant des instructions/signaux correspondants à l'unité informatique (47) pour déterminer la demande.

24. Procédé selon l'une des revendications 19 à 23, **caractérisé en ce que** le poisson est transporté au bout d'un temps de repos dans un logement suivant (25) en direction de la machine de traitement (11) dans la mesure où le moyen de surveillance (45) du logement suivant (25) en a fait la demande.

25. Procédé selon l'une des revendications 19 à 24, **caractérisé en ce que** le poisson est transféré pas à pas directement jusque devant la trappe d'entrée synchronisée(46) de la machine de traitement (11).

26. Procédé selon l'une des revendications 19 à 25, **caractérisé en ce que** le poisson tombe dans la machine de traitement (11) après l'ouverture de la trappe d'entrée synchronisée (46) de façon que son axe longitudinal soit parallèle au bord d'évacuation de la machine de traitement.
